# EUROPEAN PATENT SPECIFICATION

(11) **EP 2 442 698 B1**
(45) Date of publication and mention of the grant of the patent: **07.05.2014**
(21) Application number: 09796127.0
(22) Date of filing: 30.12.2009
(51) Int. Cl.: A47J 31/36

(54) **METHOD, SYSTEM AND RECEPTACLE FOR PREPARING A BEVERAGE**
VERFAHREN, SYSTEM UND BEHÄLTNIS FÜR DIE ZUBEREITUNG EINES GETRÄNKS
PROCÉDÉ, SYSTÈME ET RÉCEPTACLE POUR LA PRÉPARATION DE BOISSON

(30) Priority: 17.06.2009 EP 09162920; 17.06.2009 EP 09163013
(43) Date of publication of application: 25.04.2012
(73) Proprietor: Koninklijke Douwe Egberts B.V., 3532 AD Utrecht (NL)
(72) Inventor: KAMERBEEK, Ralf, NL-3454 EJ De Meern (NL); FLAMAND, John Henri, NL-6741 HP Lunteren (NL); KOELING, Hendrik Cornelis, NL-3826 BE Amersfoort (NL); POST VAN LOON, Angenita Dorothea, NL-3544 DT Utrecht (NL)
(74) Representative: Jansen, Cornelis Marinus
(86) International application number: PCT/NL2009/050836
(87) International publication number: WO 2010/137964

(56) References cited:
- EP-A- 1 163 869
- EP-A- 1 654 966
- EP-A- 1 859 712
- DE-U1- 20 105 672
- US-A- 5 897 899

## Description

The invention relates to a method and a system for preparing a predetermined quantity of beverage, such as coffee, using an extractable product contained in an exchangeable capsule. The invention also relates to a receptacle for holding such an exchangeable capsule and for use in an apparatus for preparing, out of the extractable product, such a predetermined quantity of beverage. Such a method, system and receptacle are known, for example from EP1654966A1.

More in particular, the invention relates to such a method in which the capsule is pierced by at least one blade for letting fluid flow into the capsule, as well as to such a system and receptacle, wherein the receptacle has at least one blade arranged for piercing the capsule. Such a method, system and receptacle are known, for example from EP1299022B1.

As to the exchangeable capsules, several embodiments thereof do exist, both in terms of shape and materials used. However, one of the problems still unsolved of the capsules at issue is represented by the optimization of brewing conditions, and in particular by the option of obtaining, through the capsule, a fluid flow even and optimal from the standpoint of the resulting beverage. For this purpose, a drawback often found is represented by the fact that the fluid passes through privileged portions of the capsule only, instead of throughout the internal housing receiving the infusion. Moreover, the significant parameters of the flow passing through the capsule, like, e.g., speed and direction, may variously be affected by its shape, often even in a way and to an extent a priori unforeseeable, to the detriment of the quality of the end beverage and of the repeatability of its features, e.g. in terms of taste and density.

It is an object of the invention to provide a solution according to which the process of extracting the extractable product in the exchangeable capsule is improved.

For that purpose, the invention provides a method according to claim 1, a system according to claim 4, as well as a receptacle according to claim 7. Specific embodiments of the invention are set forth in the dependent claims.

Thus, for a method and a system according to the invention, a length of the at least one blade is chosen such that during the said fluid supplying the shortest possible axial distance, measured along said central capsule axis, between the third wall and the at least one blade in the inner space is less than 70% of said overall axial capsule length, while, for a receptacle according to the invention, a length of the at least one blade is chosen such that in the said closed position the shortest possible axial distance, measured along said central cavity axis, between the support surface and the at least one blade in the internal cavity is less than 70% of said overall axial cavity length.

Therefore, for a method, system and receptacle according to the invention, a corresponding high penetration depth of the at least one blade piercing the capsule is obtained. Since the blade or blades deeply penetrate the capsule, optimal flow conditions are obtained for the fluid passing through the capsule itself, to the advantage of the quality and repeatability of the end beverage and also of the correct operation of the associated machines, which are not subject to unforeseeably variable flow conditions. In fact, the deeply penetrating blade or blades act as divider plates within the capsule, and prevent the occurring of preferential flow paths through the extractable product. In addition to this advantage of obtaining optimal flow conditions, the deeply penetrating blade or blades provide the further advantage that the extractable product within the capsule is more intensively compacted just prior to the extraction process, which also is favourable from the standpoint of the resulting beverage.

It is remarked that the said favourable "divider plate" and "compacting" effects will even be higher in cases of still higher penetration depths than the penetration depths that correspond to the mentioned percentages. That is, even higher improvements are achieved for a method and a system according to the invention, when a length of the at least one blade is chosen such that during the said fluid supplying the shortest possible axial distance, measured along said central capsule axis, between the third wall and the at least one blade in the inner space is less than 60% (preferably less than 50%, more preferably less than 40%, or even more preferably less than 30%) of said overall axial capsule length. Similarly, even higher improvements are achieved for a receptacle according to the invention, when a length of the at least one blade is chosen such that in the said closed position the shortest possible axial distance, measured along said central cavity axis, between the support surface and the at least one blade in the internal cavity is less than 60% (preferably less than 50%, more preferably less than 40%, or even more preferably less than 30%) of said overall axial cavity length.

The invention will now be further elucidated by means of, non-limiting, examples referring to the schematic figures in the enclosed drawing, in which:
Fig. 1 shows, in partial longitudinal section, an example of an embodiment of a receptacle according to the invention, wherein holding parts of the receptacle are in open position;
Fig. 2 shows the example of Fig. 1 once again, wherein, however, the holding parts are in closed position;
Fig. 3 shows, in perspective view, an example of a variant of at least one blade for use in a method, system and receptacle according to the invention.
Fig. 4 shows, in perspective view, an example of another variant of at least one blade for use in a method, system and receptacle according to the invention.

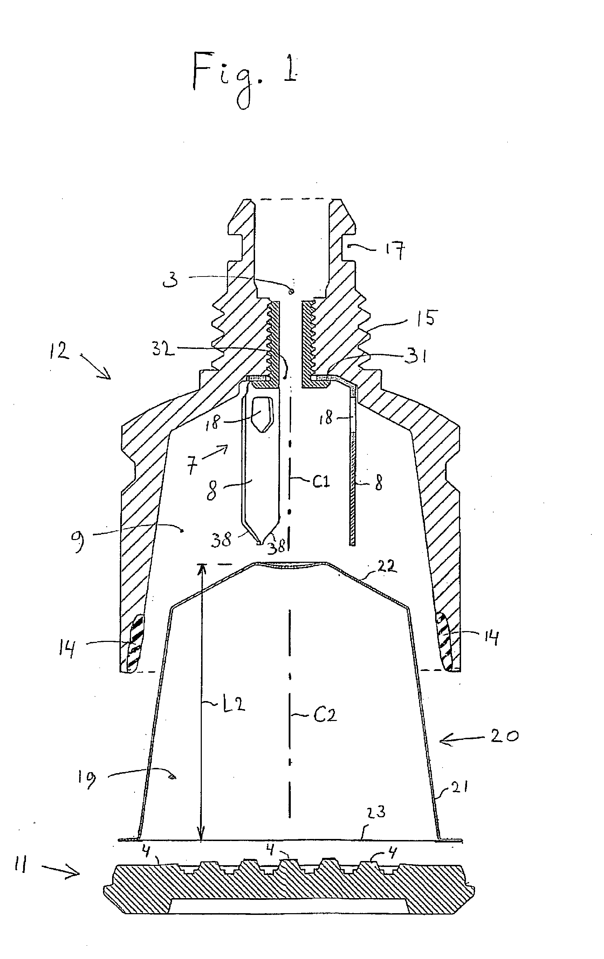

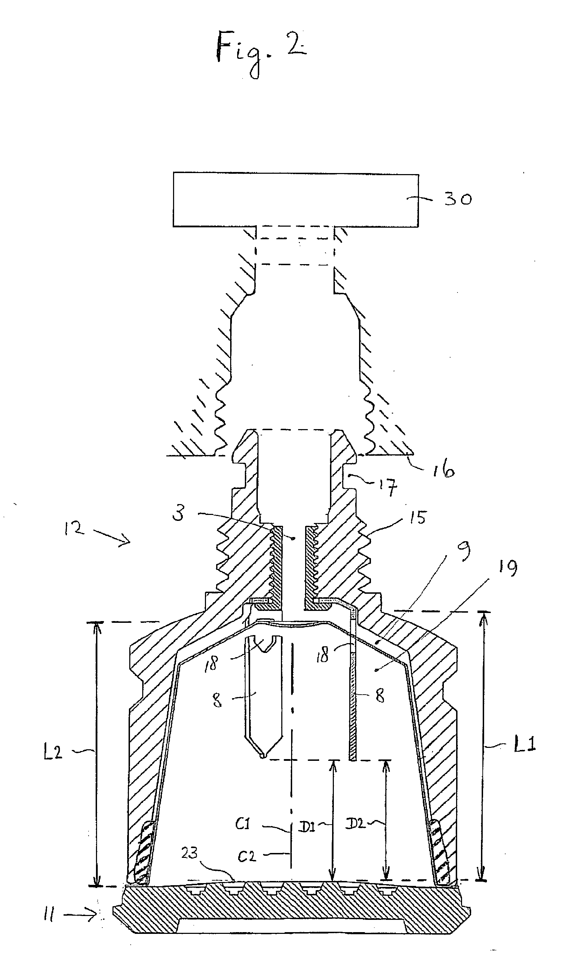

In Figs. 1 and 2 there is shown a receptacle for holding an exchangeable capsule 20 containing an extractable product and for use in an apparatus for preparing, out of the extractable product, a predetermined quantity of beverage, such as coffee. The receptacle comprises a first holding part 11 and a second holding part 12.

The second holding part 12 in use is movable in the apparatus relative to the first holding part 11 from an open position (shown in Fig. 1) at which the two parts are distant relative to one another to enable the insertion of the capsule 20 between the two parts and a closed position (shown in Fig. 2) at which the first and second holding parts together are defining an internal cavity 9 of the receptacle for containing the capsule 20 to be extracted with the first and second holding parts closed about the capsule 20. The internal cavity 9 has a longitudinal central cavity axis C1 and an overall axial cavity length L1 measured along said central cavity axis C1.

The second holding part 12 comprises a fluid intake channel 3 arranged for supplying an amount of fluid, such as water, under a pressure to the internal cavity 9, and a blade system 7 comprising at least one blade 8 arranged for piercing the capsule 20 in the internal cavity 9 for letting the fluid flow into the capsule 20.

The first holding part 11 comprises a support surface 4 arranged to abut against a wall 23 of the capsule in the internal cavity 9 for draining through that wall 23 and through the support surface 4 the prepared beverage.

A length of the at least one blade is chosen such that in the said closed position (see Fig. 2) the shortest possible axial distance D1, measured along said central cavity axis C1, between the support surface 4 and the at least one blade 8 in the internal cavity 9 is less than 70% of said overall axial cavity length L1.

In the shown example, the second holding part 12 has a thread 15 so that it can be screwed onto a part 16 (see Fig. 2) of an apparatus for preparing a beverage. A housing 17 may be used in order to arrange a seal in it to permit good leaktightness. Furthermore, in view of good leaktightness, the second holding part 12 may comprise a dynamic seal 14, that is to say a seal having a certain flexibility. This seal is made of any plastic. This seal if preferably made of elastomer.

Arranged directly at the outlet of the channel 3 is the blade system 7. The blade system 7 comprises three openworked blades 8 connected to a ring 31 with a central opening 32 (see Fig. 1) which permits intake of water. The blades 8 are able to make slits in the top of the capsule to be extracted. For that purpose, the blades 8 are provided with cutting edges 38 (see Fig. 1). Apertures 18 in the blades 8 permit a good passage of water into the capsule 20.

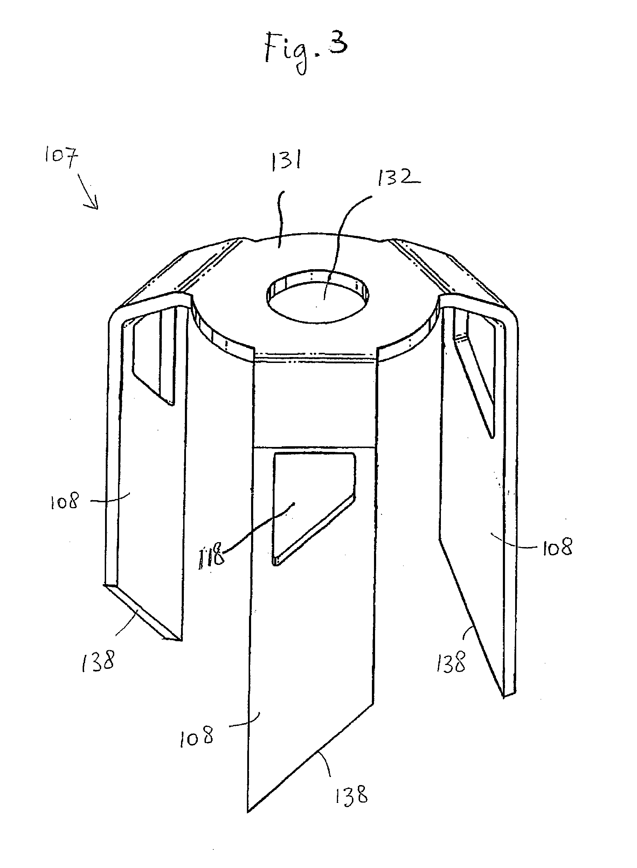

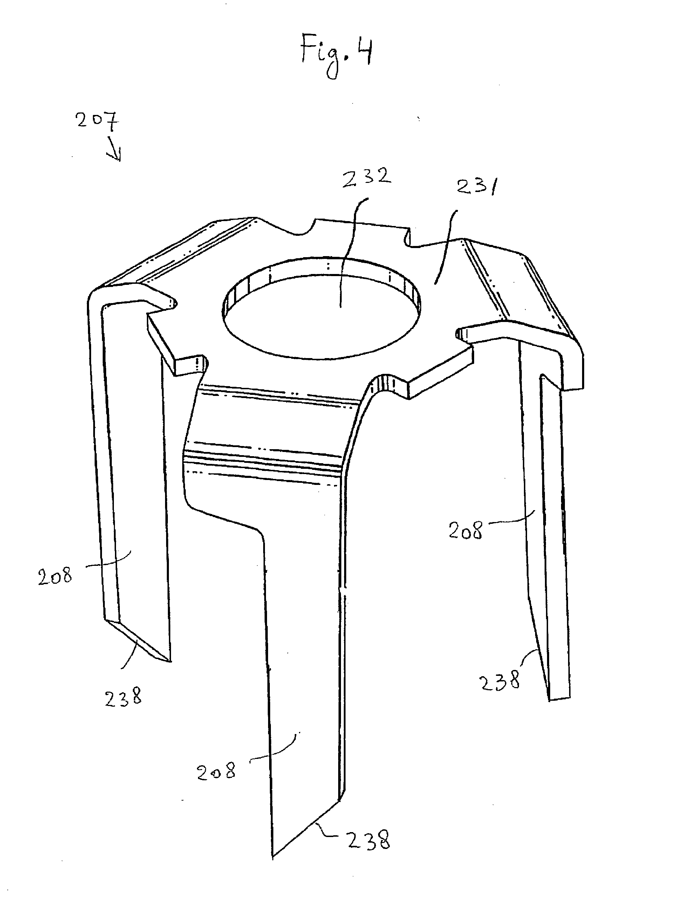

Note, that various blade systems may be used. For example, Fig. 3 shows an example of another blade system 107 that comprises three openworked blades 108 connected to a ring 131 with a central opening 132, and having apertures 118 and cutting edges 38. Furthermore, Fig. 4 shows an example of yet another blade system 207 that comprises three openworked blades 208 connected to a ring 231 with a central opening 232, and having cutting edges 238. Note, that the blades 208 are not openworked. In the shown examples, each blade system has three identical blades which are equally spaced within the blade system. According to the invention it is however possible to apply in a blade system other types of blade spacings, other numbers of blades, such as one, two, four, five, six, etcetera, and/or blades which mutually differ in shape and/or size.

The above described receptacle is for use in an apparatus for preparing a predetermined quantity of beverage, such as coffee, using an extractable product. Such an apparatus comprises such a receptacle, as well as a fluid dispensing device for supplying an amount of fluid, such as water, under a pressure to the fluid intake channel of the receptacle. In Fig. 2 there is shown, in a highly schematical way, such a fluid dispensing device 30.

A system for preparing a predetermined quantity of beverage, such as coffee, using an extractable product, comprises such an apparatus, as well as an exchangeable capsule comprising an inner space comprising the extractable product.

As mentioned above, the invention provides a method for preparing a predetermined quantity of beverage, such as coffee, using an extractable product. Such a method, which may be performed with or without a receptacle according to the invention, is now elucidated with reference to the examples shown in the Figures 1-4. Such a method comprises: providing an exchangeable capsule 20, comprising a circumferential first wall 21, a second wall 22 closing the circumferential first wall at a first end, and a third wall 23 closing the circumferential first wall 21 at a second end opposite the second wall, wherein the first, second and third wall enclose an inner space 19 comprising the extractable product, wherein the capsule 20 has a longitudinal central capsule axis C2 and an overall axial capsule length L2 measured along said central capsule axis C2; piercing the second wall 22 of the capsule 20 by means of at least one blade 8 or 108 or 208; supplying, via the pierced second wall 22 of the capsule 20, an amount of fluid, such as water, under a pressure to the inner space 19 of the capsule 20; and draining through the third wall 23 of the capsule 20 the prepared beverage; wherein a length of the at least one blade 8 or 108 or 208 is chosen such that during the said fluid supplying the shortest possible axial distance D2, measured along said central capsule axis C2, between the third wall 23 and the at least one blade 8 or 108 or 208 in the inner space 19 is less than 70% of said overall axial capsule length L2.

In the shown example, the fluid may for example be hot water and the extractable product may for example be coffee. After the hot water arrives and passes through the bed of coffee via the openings made by the blades, as a result of a rise in pressure in the capsule, the third wall 23 of the capsule 20 may for example tear on raised and recessed elements of the first holding part 11 and the capsule opens and the coffee may flow into a cup placed downstream of the receptacle 11, 12.

In the foregoing specification, the invention has been described with reference to specific examples of embodiments of the invention. It will, however, be evident that various modifications and changes may be made therein without departing from the broader scope of the invention as set forth in the appended claims.

The fluid intake channel may for example be connected to the internal cavity at different other locations, for example distant from the blade system, in which case there may be no need for the blade system to have an opening such as the shown central opening 32 of the ring 31.

Various materials may be used for the blades. It is preferable to have blades which have good resistance to piercing of aluminium capsules. The blades are thus preferably made of metal (iron, brass, chromium-plated brass) or of steel, preferably stainless steel. They may be made by stamping and folding, which makes them easy and inexpensive to produce and they have a service life equivalent to the service life of the machine on which they are fitted. The configuration of the blades may be such that it is possible to make small openings or larger openings in the capsule to be extracted. In case of slit-like openings, the shape of the slits is preferably not square, but instead substantially rectangular: the length-to-width ratio of said slits or said blades is preferably between 2 and 8.

The overall axial capsule length of the capsules to be extracted is normally of the order of 30 mm, in which case the length of the at least one blade, measured along the central capsule or cavity axis, normally is larger than 15 mm, preferably larger than 18 mm, more preferably larger than 21 mm, while the width of the blade is between 2 and 8 mm and its thickness between 0.2 and 1 mm.

The setting of the receptacle according to the invention in the apparatus is not critical. It is equally possible to provide for the water to arrive from above or from below, or any other possibility.

The capsule and parts thereof may be made of various materials, or various combinations of various materials. Also, the capsule may have various shapes. For example, the circumferential first wall may have any shape such as cylindrical, hemispherical, frustoconical or polygonal, such as hexagonal or octagonal. Also the second and third walls may have various forms, including forms which are non-flat.

However, other modifications, variations and alternatives are also possible. The specifications, drawings and examples are, accordingly, to be regarded in an illustrative rather than in a restrictive sense.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. Method for preparing a predetermined quantity of beverage, such as coffee, using an extractable product, comprising:
- providing an exchangeable capsule (20), comprising a circumferential first wall (21), a second wall (22) closing the circumferential first wall at a first end, and a third wall (23) closing the circumferential first wall at a second end opposite the second wall, wherein the first, second and third wall enclose an inner space (19) comprising the extractable product, wherein the capsule has a longitudinal central capsule axis (C2) and an overall axial capsule length (L2) measured along said central capsule axis;
- piercing the second wall of the capsule by means of at least one blade (8; 108; 208);
- supplying, via the pierced second wall of the capsule, an amount of fluid, such as water, under a pressure to the inner space of the capsule; and
- draining through the third wall of the capsule the prepared beverage;
**characterized in that** a length of the at least one blade is chosen such that during the said fluid supplying the shortest possible axial distance (D2), measured along said central capsule axis (C2), between the third wall and the at least one blade in the inner space is less than 70% of said overall axial capsule length (L2).

2. Method according to claim 1, wherein a length of the at least one blade is chosen such that during the said fluid supplying the shortest possible axial distance, measured along said central capsule axis, between the third wall and the at least one blade in the inner space is less than 60% of said overall axial capsule length.

3. Method according to claim 2, wherein a length of the at least one blade is chosen such that during the said fluid supplying the shortest possible axial distance, measured along said central capsule axis, between the third wall and the at least one blade in the inner space is less than 50% of said overall axial capsule length.

4. System for preparing a predetermined quantity of beverage, such as coffee, using an extractable product, the system comprising:
- an exchangeable capsule (20) comprising a circumferential first wall (21), a second wall (22) closing the circumferential first wall at a first end, and a third wall (23) closing the circumferential first wall at a second end opposite the second wall, wherein the first, second and third wall enclose an inner space (19) comprising the extractable product, wherein the capsule has a longitudinal central capsule axis (C2) and an overall axial capsule length (L2) measured along said central capsule axis; and
- an apparatus, the apparatus comprising:
- a receptacle for holding the exchangeable capsule (20), the receptacle comprising a first holding part (11) and a second holding part (12), wherein the second holding part in use is movable in the apparatus relative to the first holding part from an open position at which the two parts are distant relative to one another to enable the insertion of the capsule between the two parts and a closed position at which the first and second holding parts together are defining an internal cavity (9) of the receptacle for containing the capsule to be extracted with the first and second holding parts closed about the capsule, wherein the second holding part comprises a fluid intake channel (3) arranged for supplying an amount of fluid, such as water, under a pressure to the internal cavity, and a blade system (7; 107; 207) comprising at least one blade (8; 108; 208) arranged for piercing the second wall (22) of the capsule in the internal cavity for letting the fluid flow into the capsule, and wherein the first holding part comprises a support surface (4) arranged to abut against the third wall (23) of the capsule in the internal cavity for draining through that third wall and through the support surface the prepared beverage; and
- a fluid dispensing device (30) for said supplying of fluid to said fluid intake channel (3);
**characterized in that** a length of the at least one blade is chosen such that during the said fluid supplying the shortest possible axial distance (D2), measured along said central capsule axis (C2), between the third wall and the at least one blade in the inner space is less than 70% of said overall axial capsule length (L2).

5. System according to claim 4, wherein a length of the at least one blade is chosen such that during the said fluid supplying the shortest possible axial distance, measured along said central capsule axis, between the third wall and the at least one blade in the inner space is less than 60% of said overall axial capsule length.

6. System according to claim 5, wherein a length of the at least one blade is chosen such that during the said fluid supplying the shortest possible axial distance, measured along said central capsule axis, between the third wall and the at least one blade in the inner space is less than 50% of said overall axial capsule length.

7. Receptacle for holding an exchangeable capsule (20) containing an extractable product and for use in an apparatus for preparing, out of the extractable product, a predetermined quantity of beverage, such as coffee, the receptacle comprising a first holding part (11) and a second holding part (12);
wherein the second holding part in use is movable in the apparatus relative to the first holding part from an open position at which the two parts are distant relative to one another to enable the insertion of the capsule between the two parts and a closed position at which the first and second holding parts together are defining an internal cavity (9) of the receptacle for containing the capsule to be extracted with the first and second holding parts closed about the capsule, wherein the internal cavity has a longitudinal central cavity axis (C1) and an overall axial cavity length (L1) measured along said central cavity axis;
wherein the second holding part comprises:
- a fluid intake channel (3) arranged for supplying an amount of fluid, such as water, under a pressure to the internal cavity, and
- a blade system (7; 107; 207) comprising at least one blade (8; 108; 208) arranged for piercing the capsule in the internal cavity for letting the fluid flow into the capsule; and
wherein the first holding part comprises a support surface (4) arranged to abut against a wall (23) of the capsule in the internal cavity for draining through that wall and through the support surface the prepared beverage;
**characterized in that** a length of the at least one blade is chosen such that in the said closed position the shortest possible axial distance (D1), measured along said central cavity axis (C1), between the support surface and the at least one blade in the internal cavity is less than 70% of said overall axial cavity length (L1).

8. Receptacle according to claim 7, wherein a length of the at least one blade is chosen such that in the said closed position the shortest possible axial distance, measured along said central cavity axis, between the support surface and the at least one blade in the internal cavity is less than 60% of said overall axial cavity length.

9. Receptacle according to claim 8, wherein a length of the at least one blade is chosen such that in the said closed position the shortest possible axial distance, measured along said central cavity axis, between the support surface and the at least one blade in the internal cavity is less than 50% of said overall axial cavity length.

10. Apparatus for preparing a predetermined quantity of beverage, such as coffee, using an extractable product, comprising:
- a receptacle (11, 12) according to any one of claims 7-9; and
- a fluid dispensing device (30) for supplying an amount of fluid, such as water, under a pressure to the fluid intake channel (3) of the receptacle.

## Patentansprüche

1. Verfahren für die Zubereitung einer vorbestimmten Menge eines Getränks, wie beispielsweise Kaffee, unter Verwendung eines extrahierbaren Produkts, umfassend:
- das Bereitstellen einer austauschbaren Kapsel (20), umfassend eine erste Umfangwand (21), eine zweite Wand (22), welche die erste Umfangwand an einem ersten Ende abschließt, und eine dritte Wand (23), welche die erste Umfangwand an einem zweiten Ende gegenüber der zweiten Wand abschließt, wobei die erste, zweite und dritte Wand einen Innenraum (19), der das extrahierbare Produkt enthält, einschließen, wobei die Kapsel eine zentrale Kapsellängsachse (C2) und eine gesamte axiale Kapsellänge (L2), gemessen entlang der zentralen Kapselachse, aufweist;
- das Durchstechen der zweiten Wand der Kapsel mithilfe von mindestens einer Schneide (8; 108; 208);
- das Zuführen einer Menge an Flüssigkeit, wie beispielsweise Wasser, unter Druck über die durchstochene zweite Wand zum Innenraum der Kapsel; und
- das Ablassen des zubereiteten Getränks durch die dritte Wand der Kapsel;
**dadurch gekennzeichnet, dass** eine Länge der mindestens einen Schneide so gewählt ist, dass beim Zuführen der Flüssigkeit der kürzestmögliche Axialabstand (D2), gemessen entlang der zentralen Kapselachse (C2), zwischen der dritten Wand und der mindestens einen Schneide im Innenraum weniger als 70 % der gesamten axialen Kapsellänge (L2) beträgt.

2. Verfahren nach Anspruch 1, wobei eine Länge der mindestens einen Schneide so gewählt ist, dass beim Zuführen der Flüssigkeit der kürzestmögliche Axialabstand, gemessen entlang der zentralen Kapselachse, zwischen der dritten Wand und der mindestens einen Schneide im Innenraum weniger als 60 % der gesamten axialen Kapsellänge beträgt.

3. Verfahren nach Anspruch 2, wobei eine Länge der mindestens einen Schneide so gewählt ist, dass beim Zuführen der Flüssigkeit der kürzestmögliche Axialabstand, gemessen entlang der zentralen Kapselachse, zwischen der dritten Wand und der mindestens einen Schneide im Innenraum weniger als 50 % der gesamten axialen Kapsellänge beträgt.

4. System für die Zubereitung einer vorbestimmten Menge eines Getränks, wie beispielsweise Kaffee, unter Verwendung eines extrahierbaren Produkts, umfassend:
- eine austauschbare Kapsel (20), umfassend eine erste Umfangwand (21), eine zweite Wand (22), welche die erste Umfangwand an einem ersten Ende abschließt, und eine dritte Wand (23), welche die erste Umfangwand an einem zweiten Ende gegenüber der zweiten Wand abschließt, wobei die erste, zweite und dritte Wand einen Innenraum (19), der das extrahierbare Produkt enthält, einschließen, wobei die Kapsel eine zentrale Kapsellängsachse (C2) und eine gesamte axiale Kapsellänge (L2), gemessen entlang der zentralen Kapselachse, aufweist; und
- eine Vorrichtung, umfassend:
- ein Behältnis zum Aufnehmen der austauschbaren Kapsel (20), das ein erstes Aufnahmeteil (11) und ein zweites Aufnahmeteil (12) umfasst, wobei das zweite Aufnahmeteil bei Verwendung in der Vorrichtung in Bezug auf das erste Aufnahmeteil beweglich ist von einer offenen Position, an der die zwei Teile in einem Abstand voneinander sind, um das Einsetzen der Kapsel zwischen den zwei Teilen zu erlauben, und einer geschlossenen Position, an der die ersten und zweiten Aufnahmeteile zusammen einen Innenhohlraum (9) des Behältnisses zum Aufnehmen der zu extrahierenden Kapsel bilden, mit den ersten und zweiten Aufnahmeteilen um die Kapsel geschlossen, wobei das zweite Aufnahmeteil einen Flüssigkeitsansaugkanal (3) umfasst, geeignet zum Zuführen einer Menge an Flüssigkeit, wie beispielsweise Wasser, unter Druck zum Innenraum, und ein Schneidensystem (7; 107; 207), umfassend mindestens eine Schneide (8; 108; 208), angeordnet zum Durchstechen der zweiten Wand (22) der Kapsel im Innenhohlraum, um die Flüssigkeit in die Kapsel fließen zu lassen, und wobei das erste Aufnahmeteil eine Stützfläche (4) umfasst, so angeordnet, dass sie an die dritte Wand (23) der Kapsel im Innenhohlraum stößt, um das zubereitete Getränk durch diese dritte Wand und durch die Stützfläche abzulassen; und
- eine Flüssigkeitsabgabevorrichtung (30), um die Flüssigkeit dem Flüssigkeitsansaugkanal (3) zuzuführen;
**dadurch gekennzeichnet, dass** eine Länge der mindestens einen Schneide so gewählt ist, dass beim Zuführen der Flüssigkeit der kürzestmögliche Axialabstand (D2), gemessen entlang der zentralen Kapselachse (C2), zwischen der dritten Wand und der mindestens einen Schneide im Innenraum weniger als 70 % der gesamten axialen Kapsellänge (L2) beträgt.

5. System nach Anspruch 4, wobei eine Länge der mindestens einen Schneide so gewählt ist, dass beim Zuführen der Flüssigkeit der kürzestmögliche Axialabstand, gemessen entlang der zentralen Kapselachse, zwischen der dritten Wand und der mindestens einen Schneide im Innenraum weniger als 60 % der gesamten axialen Kapsellänge beträgt.

6. System nach Anspruch 5, wobei eine Länge der mindestens einen Schneide so gewählt ist, dass beim Zuführen der Flüssigkeit der kürzestmögliche Axialabstand, gemessen entlang der zentralen Kapselachse, zwischen der dritten Wand und der mindestens einen Schneide im Innenraum weniger als 50 % der gesamten axialen Kapsellänge beträgt.

7. Behältnis zum Aufnehmen einer austauschbaren Kapsel (20), enthaltend ein extrahierbares Produkt und bestimmt zur Verwendung in einer Vorrichtung, um aus dem extrahierbaren Produkt eine vorbestimmte Menge eines Getränks, wie beispielsweise Kaffee, zuzubereiten, wobei das Behältnis ein erstes Aufnahmeteil (11) und ein zweites Aufnahmeteil (12) umfasst;
wobei das zweite Aufnahmeteil bei Verwendung in der Vorrichtung in Bezug auf das erste Aufnahmeteil beweglich ist, von einer offenen Position, an der sich die zwei Teile in einem Abstand voneinander befinden, um das Einsetzen der Kapsel zwischen den zwei Teilen zu ermöglichen, und einer geschlossenen Position, an der die ersten und zweiten Aufnahmeteile zusammen einen Innenhohlraum (9) des Behältnisses zum Aufnehmen der zu extrahierenden Kapsel bilden, mit den ersten und zweiten Aufnahmeteilen um die Kapsel geschlossen, wobei der Innenhohlraum eine zentrale Längshohlraumachse (C1) und eine gesamte axiale Hohlraumlänge (L1), gemessen entlang der zentralen Hohlraumachse, aufweist;
wobei das zweite Aufnahmeteil Folgendes umfasst:
- einen Flüssigkeitseinlasskanal (3), angeordnet, um eine Menge an Flüssigkeit, wie beispielsweise Wasser, unter Druck dem Innenhohlraum zuzuführen, und
- ein Schneidensystem (7; 107; 207), umfassend mindestens eine Schneide (8; 108; 208), angeordnet zum Durchstechen der Kapsel im Innenhohlraum, um die Flüssigkeit in die Kapsel fließen zu lassen; und
wobei das erste Aufnahmeteil eine Stützfläche (4) umfasst, angeordnet, um gegen eine Wand (23) der Kapsel im Innenhohlraum zu stoßen, um die zubereitete Flüssigkeit durch diese Wand und durch die Stützfläche abfließen zu lassen;
**dadurch gekennzeichnet, dass** eine Länge der mindestens einen Schneide so gewählt ist, dass beim Zuführen der Flüssigkeit der kürzestmögliche Axialabstand (D1), gemessen entlang der zentralen Kapselachse (C1), zwischen der dritten Wand und der mindestens einen Schneide im Innenraum weniger als 70 % der gesamten axialen Hohlraumlänge (L1) beträgt.

8. Behältnis nach Anspruch 7, wobei eine Länge der mindestens Schneide so gewählt ist, dass in der geschlossenen Position der kürzestmögliche Axialabstand, gemessen entlang der zentralen Hohlraumachse, zwischen der Stützfläche und der mindestens einen Schneide im Innenhohlraum weniger als 60 % der gesamten axialen Hohlraumlänge beträgt.

9. Behältnis nach Anspruch 8, wobei eine Länge der mindestens einen Schneide so gewählt ist, dass in der geschlossenen Position der kürzestmögliche Axialabstand, gemessen entlang der zentralen Hohlraumachse, zwischen der Stützfläche und der mindestens einen Schneide im Innenhohlraum weniger als 50 % der gesamten axialen Hohlraumlänge beträgt.

10. Vorrichtung für die Zubereitung einer vorbestimmten Menge eines Getränks, wie beispielsweise Kaffee, unter Verwendung eines extrahierbaren Produkts, umfassend:
- ein Behältnis (11, 12) nach einem der Ansprüche 7-9; und
- eine Flüssigkeitsabgabevorrichtung (30), um eine Menge an Flüssigkeit, wie beispielsweise Wasser, unter einem Druck dem Flüssigkeitseinlasskanal (3) des Behältnisses zuzuführen.

## Revendications

1. Procédé de préparation d'une quantité prédéterminée d'une boisson, telle du café, depuis un produit extractible, comprenant:
- l'approvisionnement d'une capsule échangeable (20), comprenant une première paroi circonférentielle (21), une seconde paroi (22) fermant une première extrémité de la première paroi circonférentielle, et une troisième paroi (23) fermant la première paroi circonférentielle à une seconde extrémité-opposée à la seconde paroi, où les première, seconde et troisième parois entourent un espace intérieur (19), contenant le produit extractible, où la capsule présente un axe de capsule central longitudinal (C2) et une longueur de capsule axiale hors tout (L2), mesurée selon l'axe central de ladite capsule;
- le percement de la seconde paroi de la capsule, au moyen d'au moins une des lames (8; 108 ; 208) ;
- la fourniture, par l'intermédiaire de la seconde paroi percée de la capsule, d'une quantité de fluide sous pression, tels que de l'eau, dans l'espace intérieur de la capsule; et
- l'égouttage de la boisson préparée par la troisième paroi de la capsule;
ce procédé étant **caractérisé en ce que** la longueur d'au moins une des lames est choisie de façon telle que durant ladite fourniture du fluide la plus courte distance axiale possible (D2), mesurée selon ledit axe central de la capsule (C2), entre la troisième paroi et ladite lame au moins dans l'espace intérieur, est inférieure à 70 % de la dite longueur axiale de la capsule hors tout (L2).

2. Procédé selon la revendication 1, dans lequel la longueur d'au moins une des lames est choisie de façon telle que durant ladite fourniture de fluide la plus courte distance axiale possible, mesurée selon ledit axe central de la capsule, entre la troisième paroi et ladite lame au moins dans l'espace intérieur, est inférieure à 60 % de la dite longueur axiale de la capsule hors tout.

3. Procédé selon la revendication 2, dans lequel la longueur d'au moins une des lames est choisie de façon telle que durant ladite fourniture du fluide la plus courte distance axiale possible, mesurée selon ledit axe central de la capsule, entre la troisième paroi et ladite lame au moins dans l'espace intérieur, est inférieure à 50 % de ladite longueur de capsule axiale hors tout.

4. Système de préparation d'une quantité prédéterminée de boisson, telle du café, depuis un produit extractible, le système comprenant:
- une capsule échangeable (20), comprenant une première paroi circonférentielle (21), une seconde paroi (22) fermant une première extrémité de la première paroi circonférentielle, et une troisième paroi (23) fermant la première paroi circonférentielle à une seconde extrémité-opposée à la seconde paroi, où les première, seconde et troisième parois entourent un espace intérieur (19), contenant le produit extractible, où la capsule présente un axe de capsule central longitudinal (C2) et une longueur de capsule axiale hors tout (L2), mesurée selon l'axe central de ladite capsule; et,
- un appareil, cet appareil comportant
- un réceptacle pour maintenir la capsule échangeable (20), ce réceptacle comprenant une première partie de maintien (11) et une seconde partie de maintien (12), où la seconde partie de maintien en usage est mobile dans l'appareil par rapport à la première partie de maintien depuis une position ouverte, dans laquelle les deux parties sont éloignées l'une par rapport à l'autre pour permettre l'insertion de la capsule entre les deux parties et une position fermée dans laquelle la première et la seconde parties de maintien forment ensemble une cavité interne (9) du réceptacle destinée à contenir la capsule à extraire avec les première et seconde parties de maintien fermés sur la capsule, dans laquelle la seconde partie de maintien comprend un canal d'admission de fluide (3) arrangé pour fournir une quantité de fluide sous pression, tels l'eau, dans la cavité interne et un système de lame (7, 107, 207) comprenant au moins une lame (8, 108, 208) arrangée pour percer la seconde paroi (22) de la capsule dans la cavité interne et permettre l'écoulement du fluide dans la capsule, et où la première partie de maintien comprend une surface d'appui (4) disposée pour s'appuyer contre la troisième paroi (23) de la capsule dans la cavité interne pour l'égouttage de la boisson préparée par cette troisième paroi et par la surface d'appui; et
- un dispositif de distribution de fluide (30) pour la fourniture dudit fluide au canal d'admission de fluide (3) ;
ce système étant **caractérisé en ce que** la longueur d'au moins une des lames est choisie de façon telle que durant ladite fourniture du fluide la plus courte distance axiale possible (D2), mesurée selon ledit axe central de la capsule (C2), entre la troisième paroi et au moins ladite lame dans l'espace intérieur, est inférieure à 70 % de la dite longueur axiale de la capsule hors tout (L2).

5. Système selon la revendication 4, dans lequel la longueur d'au moins une des lames est choisie de façon telle que durant ladite fourniture du fluide la plus courte distance axiale possible, mesurée selon dudit axe central de la capsule, entre la troisième paroi et ladite lame au moins dans l'espace intérieur, est inférieure à 60 % de la dite longueur axiale de la capsule hors tout.

6. Système selon la revendication 5, dans lequel la longueur d'au moins une des lames est choisie de façon telle que durant ladite fourniture du fluide la plus courte distance axiale possible, mesurée selon dudit axe central de la capsule, entre la troisième paroi et au moins ladite lame dans l'espace intérieur, est inférieure à 50 % de la dite longueur axiale de la capsule hors tout.

7. Réceptacle pour le maintien d'une capsule échangeable (20), contenant un produit extractible et pour une utilisation dans un appareil pour la préparation, à partir d'un produit extractible, d'une quantité prédéterminée de boissons, telle du café, le réceptacle comprenant une première partie de maintien (11) et une deuxième partie de maintien (12) ;
dans lequel la seconde partie de maintien utilisée est mobile dans l'appareil par rapport à la première partie de maintien depuis une position ouverte, dans laquelle les deux parties sont écartées l'une de l'autre pour permettre l'insertion de la capsule entre les deux parties et une position fermée dans laquelle les première et seconde parties de maintien forment ensemble une cavité interne (9) du réceptacle destiné à contenir la capsule à extraire, les première et seconde parties de maintien étant fermées sur la capsule, dans lequel la cavité interne présente un axe de cavité central longitudinal (C1) et une longueur de cavité hors tout, axiale (L1), mesurée selon de l'axe de ladite cavité centrale ;
dans lequel la seconde partie de maintien comprend:
- un canal d'admission de fluide (3) arrangé pour fournir une quantité de fluide sous pression, tels que de l'eau, dans la cavité interne, et
- un système de lames (7, 107, 207) comprenant au moins une lame (8, 108, 208) arrangée pour percer la capsule dans la cavité interne et ainsi laisser le fluide s'écouler dans la capsule ; et
où la première partie de maintien comprend une surface d'appui (4) arrangée pour buter contre une paroi (23) de la capsule dans la cavité interne pour un égouttage par cette paroi et par la surface d'appui de la boisson préparée ;
**caractérisé en ce que** la longueur d'au moins une des lames est choisie de façon telle que durant ladite fourniture du fluide la plus courte distance axiale possible (D1), mesurée selon dudit axe central de la capsule (C1), entre la troisième paroi et ladite lame au moins dans l'espace intérieur, est inférieure à 70 % de ladite longueur de capsule axiale hors tout (L1).

8. Système selon la revendication 7, dans lequel la longueur d'au moins une des lames est choisie de façon telle que durant ladite fourniture du fluide la plus courte distance axiale possible, mesurée selon dudit axe central de la capsule, entre la troisième paroi et ladite lame au moins dans l'espace intérieur, est inférieure à 60 % de ladite longueur de capsule axiale hors tout.

9. Système selon la revendication 8, dans lequel la longueur d'au moins une des lames est choisie de façon telle que durant ladite fourniture du fluide la plus courte distance axiale possible, mesurée selon dudit axe central de la capsule, entre la troisième paroi et au moins ladite lame dans l'espace intérieur, est inférieure à 50 % de ladite longueur de capsule axiale hors tout.

10. Appareils pour préparer une quantité prédéterminée d'une boisson, tels du café, depuis un produit extractible, comprenant:-
- un réceptacle (11, 12) selon l'une quelconque des revendications 7 9 ;
- un fluide de distribution de fluide (30) pour amener une quantité de fluide sous pression, tels que de l'eau, au canal d'admission de fluide (3) du réceptacle.
